# EUROPÄISCHE PATENTSCHRIFT

(11) **EP 2 454 620 B1**
(45) Veröffentlichungstag und Bekanntmachung des Hinweises auf die Patenterteilung: **29.06.2016**
(21) Anmeldenummer: 10737841.6
(22) Anmeldetag: 19.07.2010
(51) Int. Cl.: G02B 6/00, B60Q 3/00, B60Q 3/02, F21V 8/00

(54) **LICHTLEITER, BELEUCHTUNGSEINRICHTUNG MIT EINEM SOLCHEN LICHTLEITER UND INNENAUSSTATTUNGSTEIL FÜR EIN FAHRZEUG MIT EINER DERARTIGEN BELEUCHTUNGSEINRICHTUNG**
LIGHT GUIDE, ILLUMINATION DEVICE COMPRISING SUCH A LIGHT GUIDE AND INTERIOR FITTING PART FOR A VEHICLE COMPRISING SUCH AN ILLUMINATION DEVICE
GUIDE DE LUMIÈRE, DISPOSITIF D ÉCLAIRAGE COMPORTANT UN TEL GUIDE DE LUMIÈRE ET PIÈCE D ÉQUIPEMENT INTERNE POUR UN VÉHICULE ÉQUIPÉ D UN DISPOSITIF D ÉCLAIRAGE DE CE GENRE

(30) Priorität: 17.07.2009 DE 102009027792
(43) Veröffentlichungstag der Anmeldung: 23.05.2012
(73) Patentinhaber: PSA Peugeot Citroën Automobiles S.A., 78140 Velizy Villacoublay (FR)
(72) Erfinder: BISCHLER, Elena, Justus, 96450 Coburg (DE); WOLF, Tobias, 85417 Marzling (DE); VIVION, Jean, 92130 Issy-les-Moulineaux (FR)
(86) Internationale Anmeldenummer: PCT/EP2010/060407
(87) Internationale Veröffentlichungsnummer: WO 2011/007014

(56) Entgegenhaltungen:
- DE-A1- 10 153 543
- DE-A1- 10 208 045
- US-A1- 2004 096 182
- US-A1- 2007 159 846
- US-A1- 2009 009 994

## Beschreibung

Die vorliegende Erfindung betrifft eine Beleuchtungseinrichtung, insbesondere für ein Innenausstattungsteil eines Fahrzeugs mit einem Lichtleiter für eine Beleuchtung, insbesondere eine Ambientbeleuchtung eines Fahrzeugs, insbesondere eines Kraftfahrzeugs und im Besonderen eine Beleuchtung im Innenraum eines solchen Fahrzeugs. Ferner betrifft die vorliegende Erfindung sowie ein Innenausstattungsteil für ein Fahrzeug mit einer derartigen Beleuchtungseinrichtung.

Im Stand der Technik ist es gut bekannt im Fahrzeuginnenraum Ambientbeleuchtungen vorzusehen, um mehr Komfort und Behaglichkeit im Fahrzeug zu bieten, um Akzente zu setzen, aber auch zur Orientierung.

Dabei kann es erforderlich sein Gegenstände entlang ihres Umfangs zu beleuchten. Rein beispielhaft können hier Cupholder, Lüftungsschlitze, Türgriffmulden- oder Wähl- bzw. Schalthebel, genannt werden.

Hierzu sind ringförmige Bereiche zu hinter- bzw. zu beleuchten, wobei eine möglichst hohe Blickwinkelunabhängigkeit zu erreichen ist. Dies wird bislang durch den Einsatz mehrerer Leuchtmittel z. B. LEDs erzielt, deren Licht in einen Ring aus diffusem Material eingeleitet wird, der das Licht dann homogen verteilen soll. Hierfür ist es jedoch nötig die LED-Anordnung so aufzubauen, dass eine möglichst homogene Abstrahlung erzielt werden kann, wofür ein erheblicher Bauraum erforderlich ist. Dieser Bauraum steht jedoch nicht immer zur Verfügung, so dass dieses Konzept nur bedingt einsetzbar ist. Darüber hinaus bestehen stets Bestrebungen die Anzahl der verbauten Teile und damit die 336 A1 bekannt. Aus der DE 10 2007 036 793 A1 ist ferner eine Beleuchtungseinrichtung mit einem in einem Gehäuse gehaltenen ringförmigen Lichtleiter bekannt. Das Gehäuse nimmt ferner eine transparente Blende und einen Diffusor auf Weitere Ring- bzw. kreisförmige Lichtleiter sind aus den Dokumenten US2004/0096182, DE10208045, DE10153543 und US2007/0159846 bekannt.

Die Aufgabe der vorliegenden Erfindung besteht angesichts der obigen Ausführungen darin eine Beleuchtungseinrichtung mit einem Lichtleiter für eine ringförmige Beleuchtung zu schaffen, die eine möglichst hohe Blickwinkelunabhängigkeit bei geringer Anzahl von Bauteilen und geringem benötigtem Bauraum gewährleistet.

Diese Aufgabe wird durch eine Beleuchtungseinrichtung mit den Merkmalen von Anspruch 1 gelöst. Vorteilhafte Weiterbildungen der vorliegenden Erfindung finden sich genauso wie ein Der vorliegenden Erfindung liegt der Gedanke zu Grunde eine Beleuchtungseinrichtung mit einem Lichtleiter zu schaffen, der selbst ringförmig ausgebildet ist und so gestaltet ist, dass Licht in entgegengesetzten Richtungen in den Ring eingeleitet wird und in diesem propagiert, so dass durch entgegengesetzt gewinkelte Streuflächen das aus unterschiedlichen Richtungen kommende Licht so (z. B. aus der radial außen liegenden Fläche des Lichtleiters) ausgekoppelt werden kann, dass eine möglichst gleichmäßige Leuchtdichte über den Umfang und damit eine hohe Blickwinkelunabhängigkeit erzielt wird.

Unter Streuflächen sollen auch Zylindersegmente, Prismenflächen, aufgeraute Flächen, strukturierte Flächen oder anderweitige zur Umlenkung oder Ablenkung des Lichts geeignete Flächen verstanden werden.

Dementsprechend schlägt die vorliegende Erfindung eine Beleuchtungseinrichtung mit einem Lichtleiter für eine Beleuchtung, insbesondere im Innenraum, eines Fahrzeugs vor, der einen Licht leitenden Abschnitt und einen Koppelabschnitt zum Einkoppeln von Licht umfasst. Der Koppelabschnitt umfasst hierbei eine erste Umlenkeinrichtung, um eingekoppeltes Licht in einer ersten Richtung in den Licht leitenden Abschnitt einzuleiten und eine zweite Umlenkeinrichtung, um eingekoppeltes Licht in einer zweiten zur ersten Richtung im Wesentlichen entgegengesetzten Richtung in den Licht leitenden Abschnitt einzuleiten, wobei sich der Licht leitende Abschnitt ringförmig von der ersten zur zweiten Umlenkeinrichtung erstreckt.

Ringförmig bedeutet in diesem Fall nicht zwangsweise kreisringförmig, sondern umfasst beispielsweise andere ringförmige geometrische Formen wie ovale, nierenartige oder unregelmäßig gekrümmte aber geschlossene Konturen.

Die beiden Umlenkeinrichtungen dienen vorzugsweise dazu Licht aus einer, aber auch durch mehrere Lichtquellen hinsichtlich der Lichtemissionsrichtung so umzulenken, dass das Licht jeweils in entgegengesetzten Richtungen in den Licht leitenden Abschnitt eingespeist wird.

Ferner sind auf z. B. der radial inneren Fläche des Licht leitenden Abschnitts Streuflächen vorgesehen, über die das eingekoppelte Licht, d. h. das über die Umlenkeinrichtungen eingekoppelte Licht, aus der radial äußeren Fläche des Licht leitenden Abschnitts ausgekoppelt wird. Diesbezüglich sei erwähnt, dass die radial innen liegende Fläche sowie die in Achsrichtung oben und unten liegenden Flächen Reflexionsflächen sein können, so dass Licht nur über die radial äußere Fläche des Licht leitenden Abschnitts ausgekoppelt werden kann.

In einer weiteren Ausgestaltung der Erfindung ist vorgesehen, dass die radial außen liegende Fläche sowie die in Achsrichtung oben und unten liegenden Flächen Reflexionsflächen sein können, so dass Licht nur über die radial innere Fläche des Licht leitenden Abschnitts ausgekoppelt werden kann.

Andererseits ist es auch denkbar die Streuflächen in Richtung der Mittelachse des ringförmigen Licht leitenden Abschnitts in einer unteren oder oberen Fläche vorzusehen und das Licht aus der oberen oder unteren Fläche auszukoppeln.

Die weiteren Reflektionsflächen sind jedoch nicht zwingend erforderlich. Vielmehr kann aus Kostengründen auf die zusätzlichen Reflexionsflächen verzichtet werden, so dass ein gewisses Streulicht auch an den anderen Flächen des lichtleitenden Abschnitts, sofern diese Abgedeckt sind, austreten kann.

Auf einfache Weise werden die Umlenkeinrichtungen jeweils durch Reflexionsflächen gebildet, die zur Mittelachse des lichtleitenden Abschnitts und/oder der Lichtemissionsrichtung schräg stehen. Bei einer besonderen Ausführungsform sind die Umlenkeinrichtungen dabei in gleichem aber entgegengesetztem Winkel zur Mittelachse des lichtleitenden Abschnitts und/oder der Lichtemissionsrichtung angeordnet.

Bevorzugterweise wird bei der vorliegenden Erfindung eine punktförmige Lichtquelle, z. B. eine oder mehrere LED's verwendet.

Vorteilhafterweise weist der Koppelabschnitt zum Einkoppeln des Lichts eine Koppelfläche auf, die zum Streuen des Lichts aus der punktförmigen Lichtquelle relativ zur Lichtemissionsrichtung schräg gestellte Reflexionsflächen umfasst.

Der Koppelabschnitt erstreckt sich vorzugsweise in Lichtemissionsrichtung, wobei die Erstreckung des Koppelabschnitts als Erstreckung zwischen den Koppelflächen und den Umlenkeinrichtungen definiert ist.

Dabei ist es bevorzugt, dass sich der Koppelabschnitt entweder in der Ebene, die durch den ringförmigen Licht leitenden Abschnitt gebildet wird, vorzugsweise radial innen liegend erstreckt oder aber besonders bevorzugt im Wesentlichen parallel zur Mittelachse des Licht leitenden Abschnitts und damit im Wesentlichen senkrecht zu der erwähnten Ebene. Insbesondere bei letzterer Ausgestaltung lässt sich eine sehr Bauraum sparende Konstruktion erzielen.

Die Streuflächen auf der radial innen/außen liegenden Fläche des Licht leitenden Abschnitts sind vorzugsweise derart beabstandet und geneigt, dass die Leuchtdichte an der radial äußeren/innen liegenden Fläche entlang des Licht leitenden Abschnitts entlang des gesamten Umfangs um maximal 25%, vorzugsweise um maximal 15% variiert, um eine möglichst homogene Ausleuchtung zu erreichen. Dies kann vorteilhafterweise dadurch erzielt werden, dass die Streuflächen aus zwei Gruppen bestehen, wobei die Streuflächen der ersten Gruppe dem von der ersten Umlenkeinrichtung des umgelenkten Lichts zugewandt und die Streuflächen der zweiten Gruppen dem von der zweiten Umlenkeinrichtung umgelenkten Licht zugewandt sind. Hierbei können die Streuflächen innerhalb einer Gruppe unterschiedlich geneigt und beabstandet sein, um die obige Leuchtdichtenverteilung zu erzielen. Dies kann je nach Gestalt des ringförmigen lichtleitenden Abschnitts durch entsprechende Simulationsprogramme erzielt werden. Das Simulationsprogramm, das hierfür Verwendung finden kann, ist beispielsweise vom Hersteller Infotec Soft- und Hardware GmbH und wird unter dem Namen Simulux NT vertrieben.

Die Leuchtdichtemessung kann dabei mittels eines Messgeräts der Firma Opteema Engineering GmbH mit der Bezeichnung "Technoteam LMK" erfolgen, bei dem es sich um ein Leuchtdichtemessgerät nach DIN 5032 entsprechend den Güteklassen A und B handelt.

Das Material des Lichtleiters ist vorzugsweise ein transparentes bzw. klares PMMA oder PC, so dass der Lichtleiter mit den Streuflächen auf seiner inneren Fläche spritzgegossen werden kann, wobei die Streuflächen vorzugweise bereits im Spritzgießwerkzeug gebildet werden.

Erfindungsgemäß kommt der Lichtleiter in einer Beleuchtungseinrichtung insbesondere für ein Innenausstattungsteil eines Fahrzeugs zum Einsatz, die ferner eine Lichtquelle, insbesondere eine punktförmige Lichtquelle umfasst.

Erfindungsgemäß umfasst die Beleuchtungseinrichtung einen Träger zur befestigenden Aufnahme des Lichtleiters und der Lichtquelle, so dass eine Baugruppe bzw. Baueinheit gebildet wird, die später in dem Innenausstattungsteil einfach und problemlos verbaut werden kann. Bevorzugterweise wird dabei auch der Träger als Spritzgussteil ausgebildet. Zur Aufnahme von Lichtquelle und Lichtleiter kann der Träger mehrere Verrastungen in Form von z. B. Rasthaken aufweisen, so dass Lichtleiter und Lichtquelle, die vorzugsweise eine LED, die auf einer Platine befestigt ist, sein kann, ohne die Notwendigkeit von Werkzeugen am Träger verrastet werden können. D. h. die Platine mit der Lichtquelle z. B. einer LED und der Lichtleiter werden einfach auf den Träger geclipst, wodurch die erwähnte Baueinheit bzw. Montageeinheit entsteht.

Um weiterhin zur gesteigerten Blickwinkelunabhängigkeit und homogenen Lichtverteilung beizutragen, ist es besonders bevorzugt die äußere Fläche des Lichtleiters mit einem diffusen Material zu überdecken, welches ggf. eine strukturierte Oberfläche und/oder Zusätze enthalten kann, um für eine möglichst homogene blickwinkelunabhängige Lichtverteilung zu sorgen.

Erfindungsgemäß ist der Träger aus diesem diffusen Material gebildet und überdeckt die radial äußere Fläche des lichtleitenden Abschnitts. Hierfür kann der Träger beispielsweise aus Rauchglas (PC mit Zusätzen) gebildet sein. Selbstverständlich sind aber auch andere Materialien oder Bauteile, wie bspw. eine Streuscheibe denkbar. Dadurch erhält der Träger eine Doppelfunktion als Diffuser und Träger von Lichtquelle und Lichtleiter.

Besonders bevorzugt ist es, dass die Lichtquelle eine LED ist. Hier kann vorzugsweise eine Top- LED der Firma Osram GmbH zum Einsatz kommen und insbesondere wird nur eine einzige LED verwendet, deren punktförmiges Licht, vorzugsweise über die Reflexionsflächen der Koppelfläche wenigstens aber durch die zwei Umlenkeinrichtungen so umgelenkt wird, dass Licht in den ringförmigen Licht leitenden Abschnitt in entgegengesetzten Richtungen eingespeist wird. Durch Verwendung einer einzigen LED werden die Zahl der Bauteile und damit die Herstellungskosten reduziert.

Besonders bevorzugt kommt die Beleuchtungseinrichtung in einem Innenausstattungsteil für ein Fahrzeug, insbesondere ein Kraftfahrzeug, zum Einsatz und hier insbesondere in einem Schalt- oder Wählhebel. Andererseits ist jedoch auch der Einsatz zur Beleuchtung von Ablagefächern, Cupholdern, Lüftungsauslässen und/oder Mulden für die inneren Türgriffe, etc. denkbar.

Weitere Vorteile und Merkmale, die alleinstehend oder in Kombination mit einem oder mehreren der obigen Merkmale umgesetzt werden können, sind aus der folgenden Beschreibung einer bevorzugten Ausführungsform der vorliegenden Erfindung ersichtlich, die unter Bezugnahme auf die begleitenden Zeichnungen erfolgt.

In den Zeichnungen zeigt:
Figur 1 eine perspektivische Ansicht eines Lichtleiters, der in einer Beleuchtungseinrichtung gemäß einer Ausführungsform der vorliegenden Erfindung zum Einsatz kommt;
Figur 2 eine perspektivische Ansicht eines Halters einer Beleuchtungseinrichtung gemäß einer Ausführungsform der vorliegenden Erfindung zum befestigenden Aufnehmen des Lichtleiters aus Figur 1;
Figur 3 eine Explosionsansicht des Lichtleiters aus Figur 1, des Halters aus Figur 2 und einer die Lichtquelle tragenden Platine;
Figur 4 eine perspektivische Ansicht eines Schalt- oder Wählhebels mit einer Beleuchtungseinrichtung umfassend den Lichtleiter tragenden Träger aus Figur 2; und
Figur 5 einen Querschnitt des Schalt- oder Wählhebels aus Figur 4.

In den unterschiedlichen Darstellungen sind gleiche Elemente durch die gleichen Bezugsziffern gekennzeichnet.

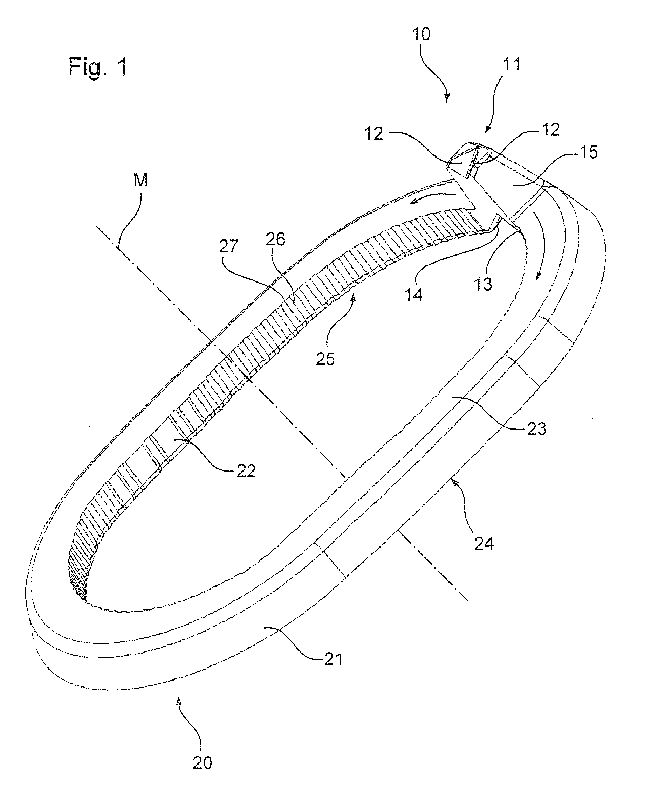

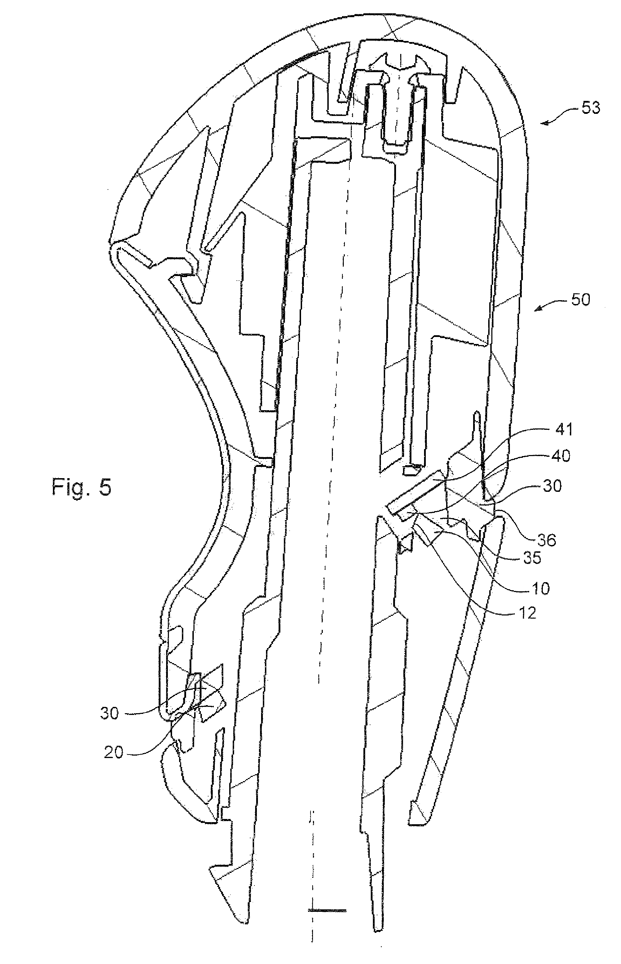

Figur 1 zeigt in einer perspektivischen Ansicht einen Lichtleiter. Der Lichtleiter ist vorzugsweise aus einem klaren PMMA oder PC hergestellt, vorzugsweise spritzgegossen, kann aber auch aus anderen Materialien gebildet sein. In der Darstellung setzt sich der Lichtleiter aus einem Koppelabschnitt 10 und einem Licht leitenden Abschnitt 20 zusammen. Der Koppelabschnitt 10 umfasst eine Lichteinkoppelfläche 11 (Koppelfläche). Die Lichteinkoppelfläche 11 dient dazu Licht, das von einer LED 40 (Fig. 5) als bevorzugtes Beispiel einer punktförmigen Lichtquelle, in den Lichtleiter einzukoppeln. Um das punktförmige Licht in dem Koppelabschnitt 10 gezielt in die Lichtleiter- Verzweigung (Gabelung) zu lenken, kann es bevorzugt sein in der Lichteinkoppelfläche 11 eine oder mehrere Reflexionsflächen 12 vorzusehen. Bei der in Figur 1 dargestellten Ausführungsform sind zwei derartige Reflexionsflächen 12 vorgesehen. Die Reflexionsflächen 12 sind dabei durch eine Kerbe in der Lichteinkoppelfläche 11 ausgebildet und sind entgegengesetzt zueinander gewinkelt.

Des Weiteren umfasst der Koppelabschnitt 10 eine erste Umlenkeinrichtung 13 und eine zweite Umlenkeinrichtung 14, die jeweils als Reflexionsflächen ausgestaltet sind. Dabei sind die Reflexionsflächen 13 und 14 ähnlich der Reflexionsflächen 12 durch eine Kerbe in dem Koppelabschnitt 10 gebildet. Ferner sind jeweils einander gegenüberliegende Reflexionsflächen 12 und 13 sowie 12 und 14 entgegengesetzt zueinander gewinkelt, wobei die in Figur 1 linker Hand dargestellte Reflexionsfläche 12 im Wesentlichen parallel zur Reflexionsfläche 13 und die in Figur 1 rechter Hand dargestellte Reflexionsfläche 12 im Wesentlichen parallel zur Reflexionsfläche 14 ausgestaltet sein kann. Die Schrägstellung erfolgt dabei in zwei Ebenen derart, dass das Licht einerseits in Umlaufrichtung des lichtleitenden Abschnitts und andererseits in Richtung zwischen (von) der Fläche aus der das Licht ausgekoppelt wird und (zu) der die Streuflächen aufweisenden Fläche umgelenkt wird.

Der Licht leitende Abschnitt 20 schließt an den Koppelabschnitt 10 bzw. die Umlenkeinrichtungen 13 und 14 an. Der Licht leitende Abschnitt 20 ist dabei ringförmig unter Verwendung einer ovalen Form ausgestaltet und erstreckt sich von der ersten Umlenkeinrichtung 13 zur zweiten Umlenkeinrichtung 14 bzw. umgekehrt. Es ist jedoch auch denkbar den Verlauf des ringförmigen Licht leitenden Abschnitts 20 anders als oval, z. B. kreisrund, nierenförmig oder anderweitig gekrümmt mit geschlossener Ringform auszugestalten.

Der Koppelabschnitt 10, der pyramidenstumpfförmig ausgestaltet sein kann, weist entsprechende Seitenflächen 15 auf, die als Reflexionsflächen 13 oder 14 ausgestaltet sein können, um einen Streulichtaustritt an diesen Flächen 15 zu vermeiden. Auf diese Ausgestaltung kann aus Kostengründen jedoch verzichtet werden.

Der Licht leitende Abschnitt 20 erstreckt sich, wie erwähnt, ringförmig um eine Mittelachse M, wobei bei unsymmetrischen Formen die Mittelachse M als ein Achse definiert ist, die senkrecht zur durch die Ringform vorgegebene Ebene verläuft. Der Licht leitende Abschnitt 20 weist hier eine radial außen liegende Fläche 21 sowie eine radial innen liegende Fläche 22 auf. Die radial außen liegende Fläche 21 und die radial innen liegende Fläche 22 sind durch eine obere 23 und eine untere 24 Fläche verbunden. Die Flächen 23 und 24 können ebenfalls als Reflexionsflächen ausgestaltet sein, um einen Lichtaustritt aus diesen Flächen zu verhindern.

Auf der radial innen liegenden Fläche 22 sind Streuflächen 25 ausgebildet, die das auf sie treffende Licht derart umlenken, dass es aus der radial äußeren Fläche 21 austritt. Dabei sind bei einer besonders bevorzugten Ausführungsform wie sie in Figur 1 dargestellt ist, die Streuflächen 25 aus zwei Gruppen an Streuflächen zusammengesetzt. Eine erste Gruppe an Streuflächen 26 ist dabei dem über die erste Umlenkeinrichtung 13 eingeleiteten Licht zugewandt, während die zweite Gruppe an Streuflächen 27 dem über die zweite Umlenkeinrichtung 14 eingeleiteten Licht zugewandt ist. Dabei grenzen die Streuflächen vorzugsweise aneinander und bilden auf der radial innen liegenden Fläche 22 dreieckig vorragende Rippen, von denen ein Schenkel die Streuflächen 26 und der andere Schenkel die Streuflächen 27 bildet.

Um eine möglichst blickwinkelunabhängige Ausleuchtung an der radial außen liegenden Fläche 21 zu erzielen, sind die Streuflächen 26 und 27 an unterschiedlichen Stellen entlang des Umfangs des Licht leitenden Abschnitts 20 unterschiedlich lang, d. h. der Schenkel des Dreiecks ist unterschiedlich lang, unterschiedlich gewinkelt und/oder unterschiedlich zueinander beabstandet ausgestaltet. Die optimale Gestaltung der Streuflächen 26 und 27 wird damit über ein Simulationsprogramm z. B. vom Hersteller Infotec Soft- und Hardware GmbH, dass unter dem Namen Simulux NT vertrieben wird, ermittelt.

Durch diese Ausgestaltung ist es möglich eine Leuchtdichte zu erzielen, die über den Umfang des Licht leitenden Abschnitts 20 um maximal 25%, vorzugsweise maximal 15% variiert, so dass eine möglichst Blickwinkel unabhängige Ausleuchtung erzielbar ist. Dabei wird die Leuchtdichte über ein Leuchtdichtemessgerät nach DIN 5032 entsprechend den Güteklassen A und B durchgeführt. Beispielhaft wird hierzu das Labormesssystem für Bild aufgelöste Leuchtdichtemessung Technoteam LMK von Opteema GmbH und die zugehörige Auswertesoftware genannt.

Der Lichtleiter aus Figur 1 ist vorzugsweise ein Spritzgussteil, wobei die Form der Reflexionsflächen 12, 13 und 14 sowie der Streuflächen 26 und 27 bereits durch die Spritzgießform vorgegeben werden kann, so dass ein kostengünstiges Bauteil geschaffen wird.

Ferner wird durch den Koppelabschnitt 10 unabhängig davon, ob eine oder mehrere LED's 40 verwendet werden - bevorzugt wird nur eine einzige LED verwendet - das emittierte Licht über die Umlenkeinrichtungen 13 und 14 in entgegengesetzten Richtungen in den Licht leitenden Abschnitt 20 eingespeist werden, um entlang des Umfangs durch entweder die Streuflächen 26 oder die Streuflächen 27 derart umgelenkt zu werden, dass das Licht auf der radial außen liegenden Fläche 21 ausgekoppelt wird. Dabei verläuft das über die Umlenkeinrichtung 13 in den lichtleitenden Abschnitt 20 eingeleitete Licht im Uhrzeigersinn, wohingegen das über die Umlenkeinrichtung 14 eingeleitete Licht gegen den Uhrzeigersinn propagiert.

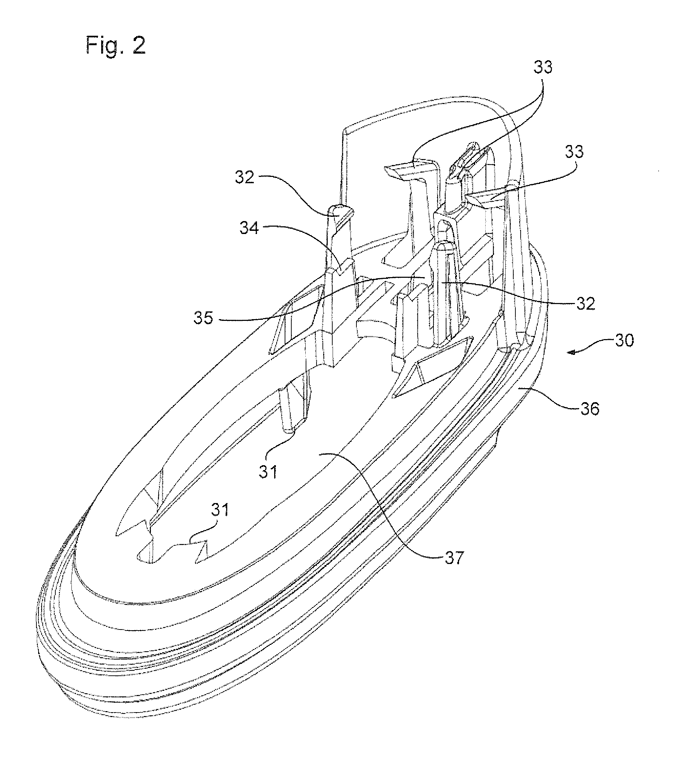

Ein in Figur 1 dargestellter Lichtleiter kommt vorzugsweise in einer Beleuchtungseinrichtung zum Einsatz. Diese umfasst vorteilhafterweise einen Halter 30, wie er in Figur 2 dargestellt ist.

Der Halter 30 weist eine Befestigungseinrichtung 31 zum befestigenden Aufnehmen eines Leuchtrings, wie er in Figur 1 dargestellt ist, auf. Bei der dargestellten Ausführungsform ist die Befestigungseinrichtung 31 als Verrastung mit Rasthaken 31 ausgestaltet. Es sind selbstverständlich aber auch andere Befestigungsanordnungen denkbar. Des Weiteren umfasst der Halter 30 aus Figur 2 eine befestigende Aufnahme für die die Lichtquelle - vorzugsweise die LED 40 - aufnehmende Fassung - hier eine Platine 41. Diese Aufnahme 32 setzt sich ebenfalls aus einer Befestigungseinrichtung sowie einer Auflage 34 für die Platine zusammen.

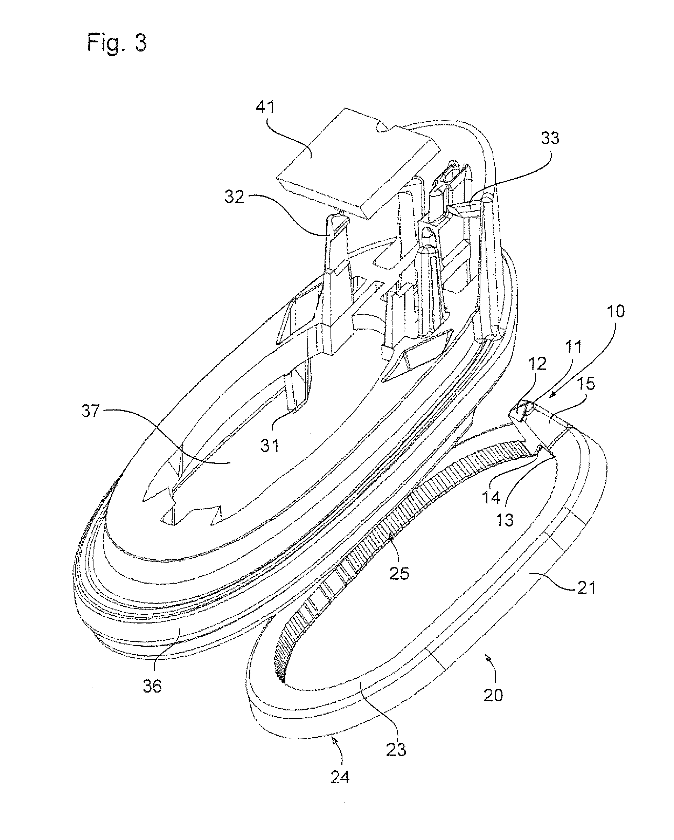

Die Befestigungseinrichtung ist bei der dargestellten Ausführungsform ebenfalls in Form einer Verrastung ausgeführt, wobei gegenüberliegend Einhängevorsprünge 33 und Rasthaken 32 angeordnet sind. Die Auflage 34 ist zwischen den Einhängevorsprüngen 33 und den Rasthaken 32 ausgestaltet. Zum Montieren der Platine wird diese mit einer Seite unter die Einhängevorsprünge 33 geschoben und dann nach unten geschwenkt, so dass sie mit der gegenüberliegenden Seite unter die Rasthaken 32 gelangt und von diesen befestigend aufgenommen wird. Des Weiteren weist der Halter 30 eine Aussparung 35 auf, durch die der Koppelabschnitt 10 zumindest teilweise und wenigstens mit seiner Lichteinkoppelfläche 11 unterhalb die Platine 41 ragen kann, wobei die LED 40 auf der Platine 41 im montierten Zustand der Lichteinkoppelfläche 11 und insbesondere den Reflexionsflächen 12 gegenüberliegend auf der Platine montiert ist. Durch diese Ausgestaltung des Halters 30 wird auf einfachste Art und Weise eine exakte Positionierung der Lichtquelle zum Koppelabschnitt 10 bzw. dessen Lichteinkoppelfläche 11 mit den Reflexionsflächen 12 gewährleistet, ohne dass eine schwierige Justage und/oder Befestigung von Nöten wäre. Vielmehr ist ein einfaches Einclipsen von Platine 41 mit LED 40 und Lichtleiter, wie er in Figur 1 dargestellt ist, ausreichend, um eine Baueinheit zu schaffen, wie sie in Figur 3 in einer Explosionsdarstellung dargestellt ist.

Darüber hinaus ist der Halter 30 mit einer Doppelfunktion ausgestaltet und aus einem Rauchglas (PC mit Zusatz) oder einem vergleichbaren diffusen Material ausgestaltet und umgibt im verbauten Zustand mit dem Lichtleiter die radial außen liegende Fläche 21 vorzugsweise vollständig. Damit kann der Halter 30 als Diffuser dienen und trägt zur homogenen und blickwinkelunabhängigen Lichtaussendung an der radial außen liegenden Fläche 36 des Halters 30 bei. Darüber hinaus ist der Halter 30 ebenfalls vorzugsweise aus einem Material gebildet, das die Herstellung im Spritzguss ermöglicht, wodurch ein günstiges Bauteil, das einfach herstellbar ist, erzielt werden kann.

Bei der LED handelt es sich vorzugsweise um eine Top- LED der Firma Osram GmbH. Es sind jedoch auch andere geeignete LED's denkbar. Darüber hinaus ist es denkbar auch nur die Befestigungseinrichtung zur Aufnahme der Lichtquelle in dem Halter 30 vorzusehen oder die Befestigungseinrichtung zum Befestigen des Lichtleiters. Bevorzugt sind jedoch beide Befestigungseinrichtungen.

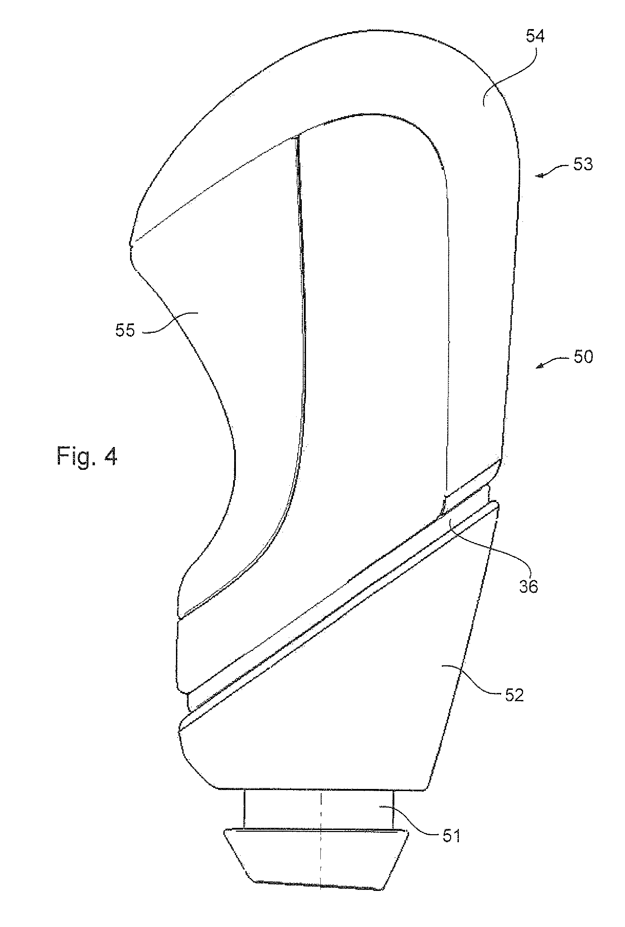

Die in Figur 3 in einer Explosionsansicht dargestellte Beleuchtungseinrichtung umfassend den Halter 30 aus Figur 2 und den Lichtleiter aus Figur 1 sowie eine Platine mit einer einzigen LED 40 bzw. 41 kann bei einer Ausführungsform der vorliegenden Erfindung in einem Schalt- oder Wählhebel zum Einsatz kommen, wie er in den Figuren 4 und 5 dargstellt ist. Es sind aber auch andere Einsatzgebiete denkbar, wie sie zuvor erwähnt wurden.

Der Schalt- oder Wählhebel 50 umfasst ein Verbindungsstück 51 zum Verbinden des Schalt- oder Wählhebels mit einer Schalt- oder Wählstange in einem Kraftfahrzeug. Das Verbindungsstück 51 ist vorzugsweise hohlzylindrisch ausgestaltet (siehe Figur 5) und wird zum Montieren auf die Schalt- oder Wählhebelstange (nicht dargestellt) gesteckt und gesichert. Ferner ist in einem unteren Abschnitt ein beispielsweise verchromter oder anderweitig gestalteter Zierring 52 vorgesehen, über dem ein Griffabschnitt 53 liegt. Der Griffabschnitt 53 kann sich dabei aus einer sog. Chromspange 54 und einem z. B. mit Leder bezogenen Abschnitt 55 zusammensetzen. Die Beleuchtungseinrichtung der vorliegenden Erfindung ist dabei zwischen dem Zierring 52 und dem Griffabschnitt 53 angeordnet, wobei das Verbindungsstück 51 durch den ringförmigen lichtleitenden Abschnitt 20 des Lichtleiters sowie die mittig vorgesehen Öffnung 37 des Halters 30 dringt. Ferner ist die radial außen liegende Fläche 36 des Halters in Form eines ringförmig umlaufenden Vorsprungs (siehe Figuren 2 und 5) ausgestaltet und zwischen Zierring 52 und Griffabschnitt 53 angeordnet, so dass nur die radial außen liegende Fläche 36 zwischen den Teilen 52 und 53 sichtbar ist.

Der Halter 30 wird dabei am Schalt- oder Wählhebel befestigt und hält selbstständig den Lichtleiter mit dem Koppelabschnitt 10 und dem lichtleitenden Abschnitt 20 sowie die Platine 41 mit der LED 40 als Baueinheit.

Wird die LED 40 über eine Steuerung angesteuert, wird von der LED 40 ausgesandtes Licht über die Reflexionsflächen 12 in die Lichteinkoppelfläche 11 eingekoppelt und propagiert im Koppelabschnitt 10 zu den Umlenkeinrichtungen 13 und 14. Von dort wird das Licht im und gegen den Uhrzeigersinn in den Licht leitenden Abschnitt 20, der sich ringförmig von der ersten Umlenkeinrichtung 13 zur zweiten Umlenkeinrichtung 14 erstreckt eingekoppelt und trifft dort je nach Richtung (im oder gegen den Uhrzeigersinn) auf die Streuflächen 26 oder 27, die entsprechend über den Umfang unterschiedlich gestaltet sind (siehe oben). Dadurch wird das Licht an der radial außen liegenden Fläche 21 ausgekoppelt und dringt durch den die radial außen liegende Fläche 21 umgebenden aus Diffusermaterial gebildeten Halter 30, um an der radial außen liegenden Fläche 36 des Halters 30 auszutreten.

Durch die Wahl und Gestaltung der Streuflächen 26, 27 entlang des Umfangs mit unterschiedlicher Gestaltung und die Verwendung eines zusätzlichen Diffusermaterials in Form des Halters 30 wird eine äußerst homogene und Blickwinkel unabhängige Ausleuchtung bzw. Beleuchtung erzielt. Dabei wird eine sehr gleichmäßige Leuchtdichte entlang des Umfangs der radialen Fläche 36 erzielt, bei der Abweichungen von maximal 25%, bevorzugt jedoch maximal 15% auftreten, gemessen mit einem Labormesssystem für Bild aufgelöste Leuchtdichtemessung, z. B. Technoteam LMK nach DIN 5032 entsprechend den Güteklassen A und B und einer zugehörigen Mess- und Auswertesoftware.

Durch eine Beleuchtungseinrichtung der vorliegenden Erfindung wird eine Beleuchtung, z. B. eines Schalt- oder Wählhebels zur besseren Orientierung im Fahrzeug bei Nacht und eine homogene und weitestgehend Blickwinkel unabhängige Beleuchtung möglich. Darüber hinaus ist der Aufbau kostengünstig und Bauraum sparend, da vorzugsweise nur eine Lichtquelle (LED) zum Einsatz kommt und aufgrund der sehr kompakten Ausgestaltung sowie zusätzlich durch die Schaffung einer Baueinheit bzw. Montageeinheit aus Halter 30, Lichtleiter und Platine 41 mit LED 40.

Darüber hinaus kann die radial außen liegende Fläche 36 des Halters 30 auch strukturiert sein oder das Rauchglas etwaig Zusätze enthalten, um spezielle Effekte zu erzielen.

Entgegen der obigen Beschreibung ist es auch denkbar das Licht nicht an der radial außen liegenden Fläche auszukoppeln, sondern an der oben erwähnten oberen oder unteren Fläche 23 bzw. 24. In diesem Fall wären die Streuflächen an entsprechend der gegenüberliegenden unteren oder oberen Fläche statt an der radial inneren Fläche vorgesehen. Darüber hinaus könnten die Umlenkflächen 13 bzw. 14 nur in einer Ebene gewinkelt sein, die dann zugleich die Einleitung in Umlaufrichtung des lichtleitenden Abschnitts und die Einleitung des Lichts in einer Richtung zwischen der oberen und unteren Fläche bewirkt. Dies ist insbesondere dann sinnvoll, wenn z.B. bei der Beleuchtung eines Cupholders, von Lüftungsschlitzen oder einer Griffmulde die Austrittsrichtung des Lichts senkrecht zur Ebene des Rings erfolgen soll.

## Patentansprüche

1. Beleuchtungseinrichtung insbesondere für ein Innenausstattungsteil eines Fahrzeugs, umfassend:
einen Lichtleiter mit
einem Licht leitenden Abschnitt (20); und
einem Koppelabschnitt (10) zum Einkoppeln von Licht mit einer ersten Umlenkeinrichtung (13), um eingekoppeltes Licht in einer ersten Richtung in den Licht leitenden Abschnitt einzuleiten, und einer zweiten Umlenkeinrichtung (14), um eingekoppeltes Licht in einer zweiten, zur ersten Richtung entgegen gesetzten Richtung in den Licht leitenden Abschnitt (20) einzuleiten, wobei sich der Licht leitende Abschnitt (20) ringförmig von der ersten (13) zur zweiten (14) Umlenkeinrichtung erstreckt und zur Auskopplung von eingekoppeltem Licht aus einer seiner Flächen, auf seiner der Fläche gegenüberliegenden Fläche, Streuflächen (25) aufweist;
eine Lichtquelle (40); und
einen Träger **dadurch gekennzeichnet, dass** der Träger mehrere Verrastungen zur befestigenden Aufnahme des Lichtleiters und der Lichtquelle (40) aufweist, so dass der Träger den Lichtleiter und die Lichtquelle trägt und, dass der Träger die Fläche (21) des Licht leitenden Abschnitts (20) aus der das Licht ausgekoppelt wird überdeckt sowie als Diffusor ausgebildet ist.

2. Beleuchtungseinrichtung nach Anspruch 1, wobei zur Auskopplung von eingekoppeltem Licht aus der radial äußeren Fläche (21) auf der radial inneren Fläche (22) Streuflächen (25) vorgesehen sind.

3. Beleuchtungseinrichtung nach Anspruch 1 oder 2, bei der die Umlenkeinrichtungen (13, 14) durch Reflexionsflächen gebildet sind, die zur Mittelachse (M) des Licht leitenden Abschnitts (20) und/oder der Lichtemissionsrichtung schräg stehen.

4. Beleuchtungseinrichtung nach einem der vorstehenden Ansprüche, bei der der Koppelabschnitt (10) zum Einkoppeln des Lichts eine Koppelfläche (11) aufweist, die relativ zur Lichtemissionsrichtung schräg gestellte Reflexionsflächen (12) umfasst.

5. Beleuchtungseinrichtung nach einem der vorstehenden Ansprüche, bei der sich der Koppelabschnitt (10) in Lichtemissionsrichtung erstreckt.

6. Beleuchtungseinrichtung nach Anspruch 5, bei der sich der Koppelabschnitt (10) parallel zur Mittelachse (M) des Licht leitenden Abschnitts (20) erstreckt.

7. Beleuchtungseinrichtung nach einem der vorstehenden Ansprüche, bei der die Streuflächen (25) derart entlang des Licht leitenden Abschnitts beabstandet und geneigt sind, dass die Leuchtdichte an der Fläche (21), an der das Licht ausgekoppelt wird, entlang des Licht leitenden Abschnitts (20) um max. 25%, vorzugsweise max. 15%, variiert.

8. Beleuchtungseinrichtung nach einem der vorstehenden Ansprüche, bei der die Streuflächen (25) aus zwei Gruppen bestehen, wobei die Streuflächen (26) der ersten Gruppe dem von der ersten Umlenkeinrichtung (13) umgelenkten Licht zugewandt und die Streuflächen (27) der zweiten Gruppe dem von der zweiten Umlenkeinrichtung (14) umgelenkten Licht zugewandt sind.

9. Beleuchtungseinrichtung nach einem der vorstehenden Ansprüche, bei der die Lichtquelle eine LED (40), vorzugsweise eine einzige LED, ist.

10. Innenausstattungsteil für ein Fahrzeug mit einer Beleuchtungseinrichtung nach einem der Ansprüche 1 bis 9.

## Claims

1. Illumination device, in particular for an interior component of a vehicle, comprising:
a light guide having
a light-guiding section (20); and
a coupling section (10) for coupling in light, having a first deflection device (13) for introducing coupled-in light into the light-guiding section in a first direction and a second deflection device (14) for introducing coupled-in light into the light-guiding section (20) in a second direction opposite to the first direction, wherein the light-guiding section (20) extends in a ring-shaped manner from the first (13) to the second (14) deflection device and has scattering surfaces (25) for coupling out from one of the surfaces thereof light that has been coupled in, said scattering surfaces being provided on the surface thereof located opposite said surface;
a light source (40); and
a carrier, **characterized in that** the carrier has multiple latching means for securely holding the light guide and the light source (40) so that the carrier carries the light guide and the light source, and **in that** the carrier covers the surface (21) of the light-guiding section (20) from which the light is coupled out and is configured as a diffusor.

2. Illumination device according to claim 1, wherein scattering surfaces (25) are provided on the radially inner surface (22) in order to couple out from the radially outer surface (21) light that has been coupled in.

3. Illumination device according to claim 1 or 2, in which the deflection devices (13, 14) are formed by reflection surfaces which are at an angle with respect to the central axis (M) of the light-guiding section (20) and/or the light emission direction.

4. Illumination device according to any one of the preceding claims, in which the coupling section (10) for coupling in the light has a coupling surface (11) which comprises reflection surfaces (12) disposed at an angle relative to the light emission direction.

5. Illumination device according to any one of the preceding claims, in which the coupling section (10) extends in the light emission direction.

6. Illumination device according to claim 5, in which the coupling section (10) extends parallel to the central axis (M) of the light-guiding section (20).

7. Illumination device according to any one of the preceding claims, in which the scattering surfaces (25) are spaced apart and inclined along the light-guiding section in such a way that the luminance at the surface (21), at which the light is coupled out, varies by at most 25%, preferably at most 15%, along the light-guiding section (20).

8. Illumination device according to any one of the preceding claims, in which the scattering surfaces (25) consist of two groups, wherein the scattering surfaces (26) of the first group face towards the light deflected by the first deflection device (13) and the scattering surfaces (27) of the second group face towards the light deflected by the second deflection device (14).

9. Illumination device according to any one of the preceding claims, in which the light source is an LED (40), preferably a single LED.

10. Interior component for a vehicle, having an illumination device according to any one of claims 1 to 9.

## Revendications

1. Dispositif d'éclairage en particulier pour une pièce d'équipement interne d'un véhicule, comprenant :
un guide de lumière présentant
une section guidant la lumière (20) ; et
une section d'injection (10) permettant d'injecter de la lumière au moyen d'un premier dispositif de déviation (13), afin d'envoyer la lumière injectée dans une première direction dans la section guidant la lumière, et d'un deuxième dispositif de déviation (14), afin d'envoyer la lumière injectée dans une deuxième direction opposée à la première direction dans la section guidant la lumière (20), la section guidant la lumière (20) s'étendant de manière annulaire du premier dispositif de déviation (13) au deuxième dispositif de déviation (14) et, pour faire sortir la lumière injectée d'une de ses surfaces, comprenant sur sa face opposée à la surface des surfaces de dispersion (25) ;
une source de lumière (40) ; et
un support, **caractérisé en ce que** le support comprend plusieurs encliquetages servant à loger par fixation le guide de lumière et la source de lumière (40), de sorte que le support porte le guide de lumière et la source de lumière, et **en ce que** le support recouvre la surface (21) de la section guidant la lumière (20) dont la lumière est sortie et est réalisé sous la forme d'un diffuseur.

2. Dispositif d'éclairage selon la revendication 1, des surfaces de dispersion (25) étant prévues sur la surface radialement intérieure (22) pour faire sortir la lumière injectée de la surface radialement extérieure (21).

3. Dispositif d'éclairage selon la revendication 1 ou 2, pour lequel les dispositifs de déviation (13, 14) sont formés par des surfaces réfléchissantes qui sont obliques par rapport à l'axe central (M) de la section guidant la lumière (20) et/ou à la direction d'émission de lumière.

4. Dispositif d'éclairage selon l'une quelconque des revendications précédentes, pour lequel la section d'injection (10) permettant d'injecter la lumière comprend une surface d'injection (11) qui comporte des surfaces réfléchissantes (12) obliques par rapport à la direction d'émission de lumière.

5. Dispositif d'éclairage selon l'une quelconque des revendications précédentes, pour lequel la section d'injection (10) s'étend dans la direction d'émission de lumière.

6. Dispositif d'éclairage selon la revendication 5, pour lequel la section d'injection (10) s'étend parallèlement à l'axe central (M) de la section guidant la lumière (20).

7. Dispositif d'éclairage selon l'une quelconque des revendications précédentes, pour lequel les surfaces de dispersion (25) sont espacées le long de la section guidant la lumière et inclinées de telle sorte que la luminance sur la surface (21) sur laquelle la lumière est sortie varie le long de la section guidant la lumière (20) de maximum 25 %, de préférence de maximum 15 %.

8. Dispositif d'éclairage selon l'une quelconque des revendications précédentes, pour lequel les surfaces de dispersion (25) sont constituées de deux groupes, les surfaces de dispersion (26) du premier groupe étant tournées vers la lumière déviée par le premier dispositif de déviation (13) et les surfaces de dispersion (27) du deuxième groupe étant tournées vers la lumière déviée par le deuxième dispositif de déviation (14).

9. Dispositif d'éclairage selon l'une quelconque des revendications précédentes, pour lequel la source de lumière comprend une diode électroluminescente (40), de préférence une seule diode électroluminescente.

10. Pièce d'équipement interne pour un véhicule comprenant un dispositif d'éclairage selon l'une quelconque des revendications 1 à 9.
